# EUROPEAN PATENT SPECIFICATION

(11) **EP 3 569 949 B1**
(45) Date of publication and mention of the grant of the patent: **26.08.2020**
(21) Application number: 18172718.1
(22) Date of filing: 16.05.2018
(51) Int. Cl.: F24H 3/04, B60H 1/22, H05B 1/02, H05B 3/50, H05B 3/84, H05B 3/06, H05B 3/42

(54) **HEATING DEVICE COMPRISING A FRAME FOR SECURING A HEATING ELEMENT BLOCK**
HEIZVORRICHTUNG MIT EINEM RAHMEN ZUR BEFESTIGUNG EINES HEIZELEMENTBLOCKS
DISPOSITIF DE CHAUFFAGE COMPRENANT UN CADRE POUR FIXER UN BLOC D'ÉLÉMENT DE CHAUFFAGE

(43) Date of publication of application: 20.11.2019
(73) Proprietor: Mahle International GmbH, 70376 Stuttgart (DE)
(72) Inventor: FEUGERE, Jacques, 68360 Soultz (FR); STOECKEL, Jérôme, 68540 Bollwiller (FR)
(74) Representative: BRP Renaud & Partner mbB Rechtsanwälte Patentanwälte Steuerberater

(56) References cited:
- EP-A1- 2 730 854
- EP-B1- 2 133 225
- EP-B1- 2 505 396

## Description

The present invention relates to an electric heating device according to the preamble of claim 1. The invention also relates to a method for producing such a heating device.

PTC heating elements have a high process safety, do not overheat and do not burn out. PTC thereby stands for Positive Temperature Coefficient. Due to the advantageous characteristics, PTC heating elements are used in particular in the automotive sector. PTC heating elements are used to heat the interior and to preheat intake air, among other things. Most of the time, a plurality of PTC heating elements are combined to a heating element block for this purpose. To mount the heating element block to a control device or to mount a heating device, which has a heating element block, in a motor vehicle, respectively, it is advantageous when the heating element block is enclosed and secured by a frame.

A motor vehicle air conditioning is known from EP 2 505 396 B1, which has an air conditioning housing and a heat exchanger. The heat exchanger has at least one electrical resistance heating element and at least two conductors, which are connected to the at least one electrical resistance heating element in an electroconductive manner so as to conduct electrical current through the at least one electrical resistance heating element and to thereby heat the electrical resistance heating element. The heat exchanger further has at least one electrical insulating element, which electrically insulates the at least two conductors. The at least one electrical resistance heating element and the at least two conductors are connected to form a heater coil. The motor vehicle air conditioner has a frame, which is formed at least partially by the air conditioning housing, for the heater coil. The frame comprises a connecting part and an attachment part, wherein the attachment part has two side struts and a bottom strut. The two side struts are embodied with a guide device, which is embodied as guide slot, for attaching and guiding the heater coil in a form-locked manner.

A generic heating device for heating a fluid flow is known from EP 2 133 225 B1. It comprises a substantially rectangular and flat heating element block, which extends at right angles to an axial direction and through which the fluid flow can flow in an axial manner, and a substantially rectangular frame for securing the heating element block, which is inserted into the frame with a heating element block underside first. The frame thereby has a frame underside and a frame upper side, wherein the frame underside is embodied as edge-side support for the heating element block underside. The frame further has an inner side, which faces the heating element block, an outer side, which faces away from the heating element block, two longitudinal sections and a transverse section. The two longitudinal sections thereby extend substantially perpendicular to the transverse section. On its inner side, the frame also has at least two detent elements for securing the heating element block. The at least two detent elements each have a detent nose, which protrudes radially inward beyond the remaining detent element. The heating element block has two outer contours, which run along the two longitudinal sections. The two outer contours have at least two detent contours, wherein the respective detent nose engages with the respective detent contour. In the case of the known heating device, the respective detent nose protrudes beyond a frame upper side plane, which extends parallel to the frame upper side.

It is in particular a disadvantage in the prior art that, due to the detent noses, which in each case protrude beyond the frame upper side plane, the heating device has a relatively large axial installation height, whereby an installation of the heating device into devices with limited installation space is possible only to a limited extent. It is further disadvantageous that a plurality of mounting directions is necessary when mounting the heating element block into the frame, whereby the mounting of the heating element block into the frame can be automated only with difficulty or not at all, respectively.

The present invention thus deals with the problem of specifying an improved or at least alternative embodiment for a heating device of the generic type, which in particular provides for a reduction of the axial installation height of the heating device and by means of which the mounting of the heating element block into the frame can further be automated more easily.

According to the invention, this problem is solved by means of the subject matter of the independent claim. Advantageous embodiments are the subject matter of the dependent claims.

The present invention is based on the general idea of providing an electric heating device, in which the axial installation height is reduced in that the respective detent nose is arranged between the frame upper side plane and the frame underside plane when it engages with the corresponding detent contour. The detent connections are further designed and/or arranged in such a way that only a single mounting direction is required to insert the heating element block into the frame. This is advantageous, because the mounting of the heating element block into the frame can thus be automated more easily, whereby the costs in response to the production of the heating device can be lowered. It is further advantageous that an installation space-optimized installation of the heating device is thus made possible. In detail, the electric heating device according to the invention is characterized in that in the engaged state, the respective detent nose is arranged between a block upper side plane, which extends parallel to a heating element block upper side, and a block underside plane, which extends parallel to the heating element block underside. The axial installation space of the frame is thus not increased by means of the respective detent nose, as a result of which an axially flatter construction of the heating device is made possible.

It is advantageous that the heating device has a control device for controlling the heating element block, wherein the control device has a housing. It is conceivable that the control device has a printed circuit board and a housing, in which the printed circuit board is arranged. Power components, e.g. transistors, in particular MOSFETs, are arranged on the printed circuit board. When operating the power components, heat is created, which is discharged via a cooling element, whereby the cooling element heats up and the power components are cooled. It is advantageous that the control device has a metallic housing or a housing of another heat-conducting material. This is advantageous, because an improved cooling of the power components is thus made possible. The heat transfer through the housing can primarily take place across the bottom surface of the housing, which faces the frame and against which the fluid flow flows. It is possible that this bottom surface has ribs, which extend in the flow direction of the fluid flow, whereby an improved heat transfer through the bottom surface is made possible. It is further conceivable that the frame is attached to the housing and/or is positioned thereon by means of a groove-spring connection or by means of a plug connection. This is advantageous, because a cost-efficient and quick mounting, which can also be performed by an untrained worker, is thus made possible. In the alternative or in addition, it is conceivable that the frame is secured to the housing by means of a screw connection.

A possible embodiment proposes that the respective detent contour is formed by means of a depression on the respective outer contour. This is advantageous, because a depression can be embodied on the outer contour with relatively simple technical means. It is conceivable that the depression is drilled or milled or punched into the outer contour. In response to the mounting of the heating element block in the frame, the detent noses are engaged with the depressions. The depressions are embodied complementary to the detent noses and have to further be embodied in such a way that they sufficiently support the detent noses in order to secure the heating element block in the frame. It is also conceivable that the respective depression is embodied substantially rectangular.

A further possible embodiment proposes that the respective depression is arranged axially spaced apart from the heating element block upper side and axially spaced apart from the heating element block underside, thus has a closed circumferential contour within the outer contour. So that the respective detent nose can be engaged with the respective depression in response to the insertion of the heating element block into the frame, it is advantageous when the axial height of the respective detent element corresponds approximately to half of the axial height of the frame. This is advantageous, because the respective detent element thus has a higher stability and can be produced cost-efficiently. The axial height of the detent nose can be about as large as the axial height of the depression. In the alternative, it is also conceivable that the axial height of the detent nose is only about half as large as the axial height of the depression.

In an alternative embodiment, provision can be made for the respective depression to adjoin the heating element block upper side in an open manner. It is conceivable that for each depression, which adjoins the heating element block upper side in an open manner, the outer contour has a depression, which is located opposite this depression, is thus mirrored on the longitudinal central plane and adjoins the heating element block underside in an open manner. This is advantageous, because it is thus made possible to insert the heating element block into the frame with the heating element block upper side first as well as with the heating element block underside first. It is conceivable that the width of the respective depression, which is measured perpendicular at right angles to the axial direction, is substantially identical to the width of the respective detent nose, which is measured perpendicular to the axial direction. The heating element block is thus secured in the frame in a particularly stable manner. So that the respective detent nose can be engaged with the respective depression in response to the insertion of the heating element block into the frame, it is advantageous when the axial height of the respective detent element corresponds to about the axial height of the frame.

Provision can advantageously be made for the respective outer contour to be formed by an edge-side outer wall of the heating element block, wherein the respective depression completely penetrates the respective outer contour, thus said outer wall, in a radial manner. The detent nose can be embodied in such a way that the detent nose, which engages with the depression, penetrates the depression substantially completely in a radial manner. This is advantageous, because the heating element block is thus secured in a particularly stable manner in the frame. In the alternative, it is also conceivable that the detent nose, which engages with the depression, only partially penetrates the depression in a radial manner. The respective detent nose can thus be engaged with the respective depression more easily. This is advantageous, because a simpler mounting of the heating element block into the frame is thus made possible.

In a further embodiment of the invention, provision can be made for the heating element block to have a connecting section, which is spaced apart from the transverse section, for connecting the heating element block to a control device. Provision can further be made for at least two detent contours to be embodied on the respective outer contour on the side, which is spaced apart from the connecting section. The heating element block can be electrically contacted by means of the control device or by means of the power components, respectively. At the same time, the heating element block is secured in the frame in the area of the connecting section by means of the control device. According to this, it is sufficient, when the frame has detent elements on the area, which faces away from the connecting area, because it is not absolutely necessary that the heating element block is additionally secured in the frame by means of detent elements in the connecting area. By forgoing detent elements in the area of the connecting section, the costs in response to the production of the frame can be lowered.

In a preferred embodiment, provision can be made for the heating element block to have at least two rod-shaped heating elements, which extend parallel to one another, and for the at least two heating elements to have lamellae, through which the fluid flow can flow in an axial manner and which thereby cooperate with the fluid flow so as to transfer heat. As a result of the operation of the heating elements, the lamellae heat up. When the heat exchanger area is flown through, the air also flows through the lamellae. As a result of the lamellae, the surface, at which heat can be transferred to the airflow, is enlarged. This results in an improved transfer of the heat from the heating elements to the airflow and thus in an improved performance of the heating device.

Advantageously, provision can further be made for the frame to be embodied in one piece. This is advantageous, because the costs and the expenditure of time in response to the production of the frame can thus be reduced. It is conceivable that the frame is an injection molded part. This is advantageous, because it is thus made possible to produce the frame in large quantity in a cost-efficient manner. It is further conceivable that the at least two detent elements are embodied in one piece with the frame. This results in a lower effort in response to the production of the frame because it is not necessary to individually attach the respective detent element to the frame. The detent elements, which re embodied in one piece with the frame, further have a higher stability than detent elements, which are embodied separately from the frame and which are attached to the frame.

According to a further advantageous embodiment, provision can be made for the at least two detent elements to be injection molded to the frame. It is thus made possible to individually embody the frame or the number of the detent elements, which the frame has, respectively, according to the respective demands of the potential customers. If the detent elements are a separate component and are injection molded to the frame, this is possible more easily than if the frame and the detent elements are produced in one piece, e.g. by means of injection molding, preferably of plastic.

It is also conceivable that the heating device of the above-described type is used in an air conditioning. The air conditioning has at least one evaporator for cooling an airflow and at least one heating device of the above-described type for heating the airflow. The air conditioning further has an air conditioning housing, in which the at least one evaporator and the at least one heating device are arranged.

The heating device of the above-described type is produced by inserting the heating element block into the frame in an axial mounting direction. The heating element block is thereby inserted into the frame with the heating element block underside first, so that the heating element block underside bears on the support and the detent noses lock with the detent contours.

Further important features and advantages of the invention follow from the subclaims, from the drawings and from the corresponding figure description by means of the drawings.

It goes without saying that the above-mentioned features and the features, which will be described below, cannot only be used in the respective specified combination, but also in other combinations or alone, without leaving the scope of the present invention.

Preferred exemplary embodiments of the invention are illustrated in the drawings and will be described in more detail in the description below, whereby identical reference numerals refer to identical or similar or functionally identical components.

In each case schematically,
- Fig. 1: shows a lateral view of a heating element block according to the invention comprising a depression, which is axially spaced apart from a heating element block upper side as well as from a heating element block underside, in response to the mounting into a frame according to the invention,
- Fig. 2: shows a highly simplified view of a longitudinal section of a heating device according to the invention in the area of a depression, which is axially spaced apart from the heating element block upper side as well as from the heating element block underside, and engages with a detent element,
- Fig. 3: shows a highly simplified view of a cross section of the heating device according to the invention in the area of a depression, which is axially spaced apart from the heating element block upper side as well as from the heating element block underside, and engages with a detent element,
- Fig. 4: shows a lateral view of a heating element block according to the invention comprising a depression, which adjoins the heating element block upper side in an open manner,
- Fig. 5: shows a highly simplified view of a longitudinal section of the heating device according to the invention in the area of a depression, which adjoins the heating element block upper side in an open manner and engages with a detent element,
- Fig. 6: shows a highly simplified **view** of a cross section of the heating device according to the invention in the area of a depression, which adjoins the heating element block upper side in an open manner and engages with a detent element,
- Fig. 7: shows an isometric view onto a heating device, which is not in accordance with the invention.

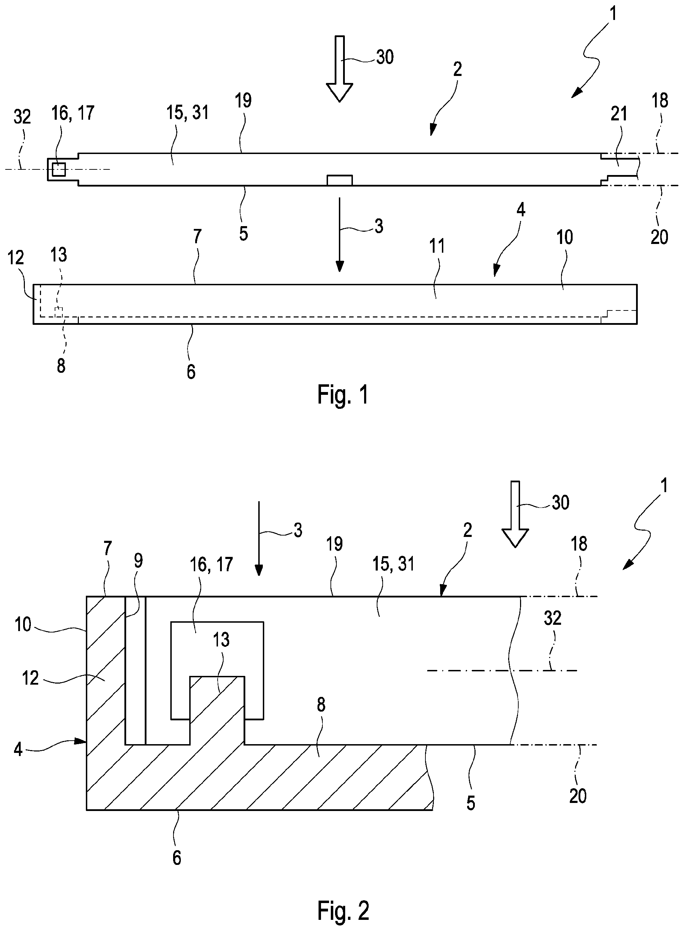

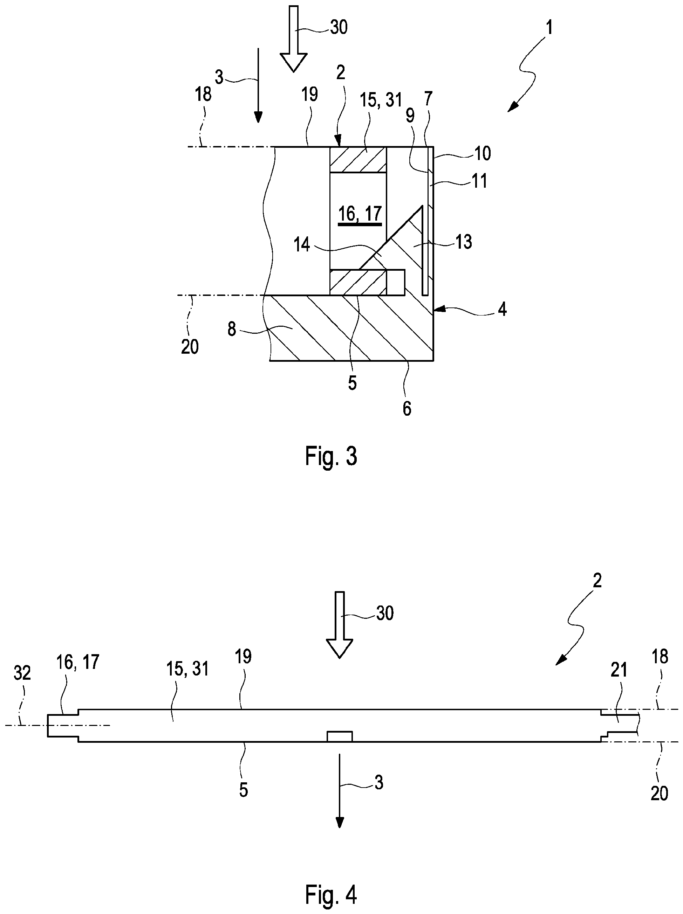

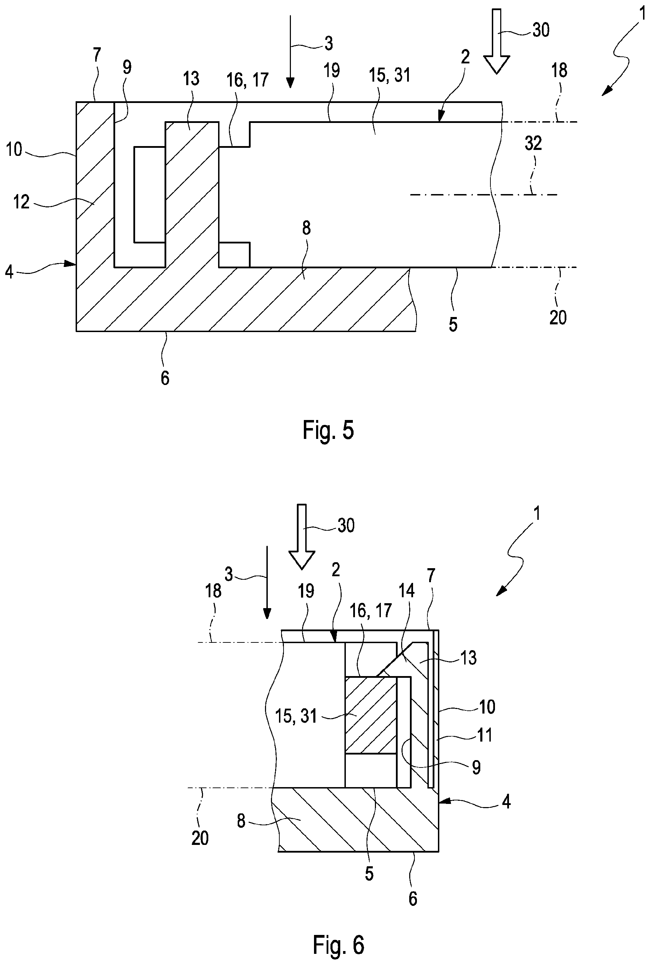

According to Figs. 1 to 7, an electric heating device 1 for heating a fluid flow 30, which is suggested by an arrow in Fig. 1, has a substantially rectangular and flat heating element block 2, which extends at right angles to an axial direction 3 and through which the fluid flow 30 can flow in an axial manner. Advantageously, the heating element block 2 is configured to be flat, so that it extends substantially in a plane 32. This plane 32, which can be the longitudinal central plane of the heating element block 2 at the same time, extends at right angles or perpendicular, respectively, to the axial direction 3. The electric heating device 1 further has a substantially rectangular frame 4 for securing the heating element block 2, which is inserted into the frame 4, with a heating element block underside 5 first. The frame 4 has a frame underside 6 and a frame upper side 7, wherein the frame underside 6 is embodied as edge-side support 8 for the heating element block underside 5. The frame 4 further has an inner side 9, which faces the heating element block 2, and an outer side 10, which faces away from the heating element block 4. The frame 4 further has two longitudinal sections 11 and a transverse section 12, wherein the two longitudinal sections 11 extend substantially perpendicular to the transverse section 12. Detent elements 13 for securing the heating element block 2 are arranged on the inner side 9 of the frame 4. It is conceivable that the frame 4 only has two detent elements 13. It is likewise possible, however, that the frame 4 has three or more detent elements 13. Each of the detent elements 13 in each case has a detent nose 14, which protrudes radially inward beyond the remaining detent element 13. The geometric shapes of the detent noses 14 illustrated in Fig. 3 and Fig. 6 are to be understood in a purely exemplary manner. The heating element block 2 has two outer contours 15, which run along the two longitudinal sections 11, wherein the two outer contours 15 have detent contours 16, with which the respective detent nose 14 engages. The respective detent contour 16 is thereby formed by a depression 17 on the respective outer contour 15. According to Fig. 1 and Fig. 2, the respective depression 17 has a rectangular basic shape. It does not leave the scope of the present invention if the respective depression 17 has a different geometric shape. When the heating element block 2 is inserted, the respective detent nose 14 is arranged between a block upper side plane 18, which extends parallel to a heating element block upper side 19, and a block underside plane 20, which extents parallel to the heating element block underside 5. The block upper side plane 18 and the block underside plane 20 extend parallel to the above-mentioned plane 32 or longitudinal central plane 32, respectively, of the heating element block 2.

As illustrated in Figs. 1 to 3, the respective depression 17 is arranged axially spaced apart from the heating element block upper side 19 and axially spaced apart from the heating element block underside 5. According to Figs. 4 to 6, provision can be made in the case of a different design for the respective depression 17 to adjoin the heating element block upper side 19 in an open manner. According to Figs. 1 to 6, the respective depression 17 completely penetrates the respective outer contour 15 in a radial manner. It is also conceivable that the respective depression 17 does not completely penetrate the respective outer contour 15, but only partially penetrates it.

Advantageously, the respective outer contour 15 is formed by an edge-side outer wall 31 of the heating element block 2. The respective depression 17 thus penetrates this outer wall 31.

According to Figs. 1, 4 and 7, the heating element block 2 has a connecting section 21, which is spaced apart from the transverse section 12, for connecting the heating element block 2 to a control device 22. According to Fig. 1, the detent contour 16 is embodied on the outer contour 15 on the side, which is spaced apart from the connecting section 21. It is likewise possible that more than one detent contour 16 is embodied on the outer contour 15 and that the respective detent contour 16 is not arranged on the side, which is spaced apart from the connecting section 21. According to Fig. 4, it is also possible that a detent contour 16 is embodied on the side, which is spaced apart from the connecting section 21, and that another detent contour 16 is embodied on another location of the outer contour 15.

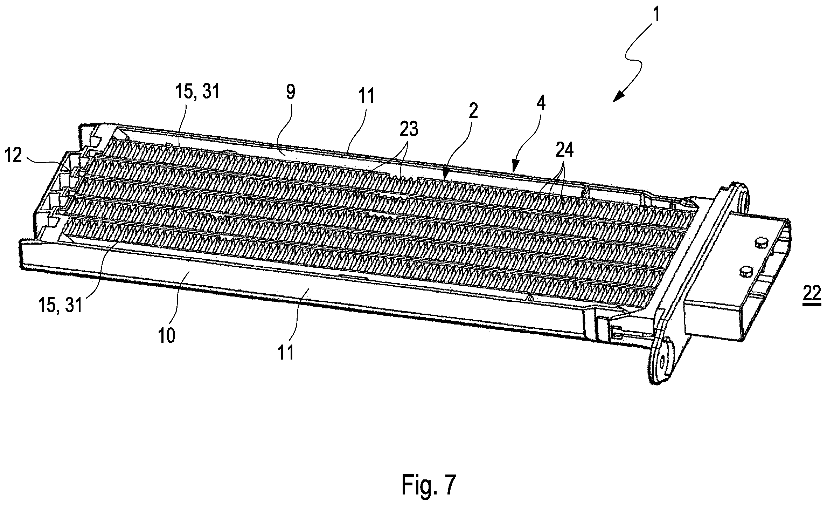

As illustrated in Fig. 7, the heating element block 2 has a plurality of rod-shaped heating elements 23, which extend parallel to one another. The number of the heating elements 23 shown in Fig. 7 is to thereby only be understood in an exemplary manner. It is conceivable that the heating elements 23 have lamellae 24, through which the fluid flow 30 can flow in an axial manner and thereby cooperate with the fluid flow 30 so as to transfer heat.

It is conceivable that the frame 4 is embodied in one piece and/or is an injection molded part made of plastic. It is further conceivable that the respective detent elements 13 are embodied in one piece with the frame 4. It is also possible that the respective detent elements 13 are injection molded to the frame 4.

As illustrated in Fig. 1, the heating element block 2 can be inserted into the frame 4 in an axial mounting direction with the heating element block underside 5 first, so that the heating element block underside 5 bears on the support 8 and the respective detent nose 14 is locked with the respective detent contour 16, see Figs. 2, 3, 5 and 6.

The heating device 1 of the above-described type can be used in an air conditioning. The air conditioning thereby has at least one evaporator for cooling an airflow and at least one heating device 1 of the above-described type for heating the airflow, which are arranged in an air conditioning housing.

## Claims

1. An electric heating device (1) for heating a fluid flow (30),
- comprising a substantially rectangular and flat heating element block (2), which extends at right angles to an axial direction (3) and through which the fluid flow (30) can flow in an axial manner,
- comprising a substantially rectangular frame (4) for securing the heating element block (2), which is inserted into the frame (4), with a heating element block underside (5) first,
- wherein the frame (4) has a frame underside (6) and a frame upper side (7),
- wherein the frame underside (6) is embodied as edge-side support (8) for the heating element block underside (5),
- wherein the frame (4) has an inner side (9), which faces the heating element block (2), and an outer side (10), which faces away from the heating element block (2),
- wherein the frame (4) has two longitudinal sections (11) and a transverse section (12),
- wherein the two longitudinal sections (11) extend substantially perpendicular to the transverse section (12),
- wherein, on its inner side (9), the frame (4) has at least two detent elements (13) for securing the heating element block (2),
- wherein the at least two detent elements (13) each have a detent nose (14), which protrudes radially inward beyond the remaining detent element (13),
- wherein the heating element block (2) has two outer contours (15), which run along the two longitudinal sections (11),
- wherein the two outer contours (15) have at least two detent contours (16),
- wherein the respective detent nose (14) engages with the respective detent contour (16),
**characterized in**
**that** the respective detent nose (14) is arranged between a block upper side plane (18), which extends parallel to a heating element block upper side (19), and a block underside plane (20), which extends parallel to the heating element block underside (5).

2. The heating device according to claim 1,
**characterized in**
**that** the respective detent contour (16) is formed by means of a depression (17) on the respective outer contour (15).

3. The heating device according to claim 2,
**characterized in**
**that** the respective depression (17) is arranged axially spaced apart from the heating element block upper side (19) and axially spaced apart from the heating element block underside (5).

4. The heating device according to claim 2,
**characterized in**
**that** the respective depression (17) adjoins the heating element block upper side (19) in an open manner

5. The heating device according to one of claims 2 to 4,
**characterized in**
- **that** the respective outer contour (15) is formed by an edge-side outer wall (31) of the heating element block (2),
- **that** the respective depression (17) completely penetrates the respective outer wall (31) in a radial manner.

6. The heating device according to one of the preceding claims,
**characterized in**
- **that** the heating element block (2) has a connecting section (21), which is spaced apart from the transverse section (12), for connecting the heating element block (2) to a control device (22),
- **that** at least two detent contours (16) are embodied on the respective outer contour (15) on the side, which is spaced apart from the connecting section (21).

7. The heating device according to one of the preceding claims,
**characterized in**
- **that** the heating element block (2) has at least two rod-shaped heating elements (23), which extend parallel to one another,
- **that** the at least two heating elements (23) have lamellae (24), through which the fluid flow (30) can flow in an axial manner and which thereby cooperate with the fluid flow (30) so as to transfer heat.

8. The heating device according to one of the preceding claims,
**characterized in**
**that** the frame (4) is embodied in one piece

9. The heating device according to one of the preceding claims,
**characterized in**
**that** the frame (4) is an injection molded part made of plastic.

10. The heating device according to one of the preceding claims, **characterized in**
**that** the at least two detent elements (13) are embodied in one piece with the frame (4).

11. The heating device according to one of claims 1 to 9,
**characterized in**
**that** the at least two detent elements (13) are injection molded to the frame (4).

12. An air conditioning,
- comprising at least one evaporator for cooling an airflow and at least one heating device (1) according to one of the preceding claims for heating the airflow,
- comprising an air conditioning housing, in which the at least one evaporator and the at least one heating device (1) are arranged.

13. A method for producing a heating device (1) according to one of claims 1 to 11, in the case of which the heating element block (2) is inserted into the frame (4) in the axial direction (3), with the heating element block underside (5) first, so that the heating element block underside (5) bears on the support (8) and the detent noses (14) lock with the detent contours (16).

## Patentansprüche

1. Elektrische Heizvorrichtung (1) zum Heizen einer Fluidströmung (30),
- umfassend einen im Wesentlichen rechteckigen und flachen Heizelementblock (2), der sich bei rechten Winkeln zu einer Achsrichtung (3) erstreckt und durch den die Fluidströmung (30) auf eine axiale Weise strömen kann,
- umfassend einen im Wesentlichen rechteckigen Rahmen (4) zum Sichern des Heizelementblocks (2), der in den Rahmen (4) eingesteckt ist, mit einer Heizelementblockunterseite (5) zuerst,
- wobei der Rahmen (4) eine Rahmenunterseite (6) und eine Rahmenoberseite (7) aufweist,
- wobei die Rahmenunterseite (6) als randseitige Stütze (8) für die Heizelementblockunterseite (5) ausgeführt ist,
- wobei der Rahmen (4) eine Innenseite (9) aufweist, die zu dem Heizelementblock (2) zeigt, und eine Außenseite (10), die von dem Heizelementblock (2) weg zeigt,
- wobei der Rahmen (4) zwei Längsabschnitte (11) und einen Querabschnitt (12) aufweist,
- wobei die zwei Längsabschnitte (11) sich im Wesentlichen senkrecht zu dem Querabschnitt (12) erstrecken,
- wobei an seiner Innenseite (9) der Rahmen (4) mindestens zwei Rastelemente (13) zum Sichern des Heizelementblocks (2) aufweist,
- wobei die mindestens zwei Rastelemente (13) jeweils eine Rastnase (14) aufweisen, die radial über das restliche Rastelement (13) hinaus vorragt,
- wobei der Heizelementblock (2) zwei Außenkonturen (15) aufweist, die entlang der zwei Längsabschnitte (11) verlaufen,
- wobei die zwei Außenkonturen (15) mindestens zwei Rastkonturen (16) aufweisen,
- wobei die jeweilige Rastnase (14) mit der jeweiligen Rastkontur (16) eingreift,
**dadurch gekennzeichnet**
**dass** die jeweilige Rastnase (14) zwischen einer Blockoberseitenebene (18), die sich parallel zu einer Heizelementblockoberseite (19) erstreckt, und einer Blockunterseitenebene (20), die sich parallel zu der Heizelementblockunterseite (5) erstreckt, angeordnet ist.

2. Heizvorrichtung nach Anspruch 1,
**dadurch gekennzeichnet,**
**dass** die jeweilige Rastkontur (16) mittels einer Vertiefung (17) an der jeweiligen Außenkontur (15) gebildet ist.

3. Heizvorrichtung nach Anspruch 2,
**dadurch gekennzeichnet,**
**dass** die jeweilige Vertiefung (17) axial von der Heizelementblockoberseite (19) beabstandet und axial von der Heizelementblockunterseite (5) beabstandet angeordnet ist.

4. Heizvorrichtung nach Anspruch 2,
**dadurch gekennzeichnet,**
**dass** die jeweilige Vertiefung (17) an die Heizelementblockoberseite (19) auf eine offene Weise anliegt.

5. Heizvorrichtung nach einem der Ansprüche 2 bis 4,
**dadurch gekennzeichnet,**
- **dass** die jeweilige Außenkontur (15) durch eine randseitige Außenwand (31) des Heizelementblocks (2) gebildet ist,
- **dass** die jeweilige Vertiefung (17) die jeweilige Außenwand (31) auf eine radiale Weise vollständig durchdringt.

6. Heizvorrichtung nach einem der vorstehenden Ansprüche,
**dadurch gekennzeichnet,**
- **dass** der Heizelementblock (2) einen Verbindungsabschnitt (21) aufweist, der von dem Querabschnitt (12) beabstandet ist, um den Heizelementblock (2) mit einer Stellvorrichtung (22) zu verbinden,
- **dass** mindestens zwei Rastkonturen (16) an der jeweiligen Außenkontur (15) an der Seite ausgeführt sind, die von dem Verbindungsabschnitt (21) beabstandet ist.

7. Heizvorrichtung nach einem der vorstehenden Ansprüche,
**dadurch gekennzeichnet,**
- **dass** der Heizelementblock (2) mindestens zwei stabförmige Heizelemente (23) aufweist, die sich parallel zueinander erstrecken,
- **dass** die mindestens zwei Heizelemente (23) Lamellen (24) aufweisen, durch die Fluidströmung (30) auf eine axiale Weise strömen kann und die dadurch mit der Fluidströmung (30) zusammenwirken, um Wärme zu übertragen.

8. Heizvorrichtung nach einem der vorstehenden Ansprüche,
**dadurch gekennzeichnet,**
**dass** der Rahmen (4) in einem Stück ausgeführt ist.

9. Heizvorrichtung nach einem der vorstehenden Ansprüche,
**dadurch gekennzeichnet,**
**dass** der Rahmen (4) ein aus Kunststoff hergestelltes Spritzgussteil ist.

10. Heizvorrichtung nach einem der vorstehenden Ansprüche,
**dadurch gekennzeichnet,**
**dass** die mindestens zwei Rastelemente (13) in einem Stück mit dem Rahmen (4) ausgeführt sind.

11. Heizvorrichtung nach einem der Ansprüche 1 bis 9,
**dadurch gekennzeichnet,**
**dass** die mindestens zwei Rastelemente (13) an den Rahmen (4) spritzgegossen sind.

12. Klimaanlage,
- umfassend mindestens einen Verdampfer zum Kühlen einer Luftmasse und mindestens eine Heizvorrichtung (1) nach einem der vorstehenden Ansprüche zum Heizen der Luftmasse,
- umfassend ein Klimaanlagengehäuse, in dem der mindestens eine Verdampfer und die mindestens eine Heizvorrichtung (1) angeordnet sind.

13. Verfahren zur Fertigung einer Heizvorrichtung (1) nach einem der Ansprüche 1 bis 11, in welchem Fall der Heizelementblock (2) in den Rahmen (4) in der Achsrichtung (3) mit der Heizelementblockunterseite (5) zuerst eingesteckt ist, sodass die Heizelementblockunterseite (5) auf der Stütze (8) liegt und die Rastnasen (14) mit den Rastkonturen (16) einrasten.

## Revendications

1. Dispositif de chauffage électrique (1) pour chauffer un écoulement de fluide (30),
- comprenant un bloc d'éléments chauffants sensiblement rectangulaire et plat (2), qui s'étend perpendiculairement à une direction axiale (3) et à travers lequel l'écoulement de fluide (30) peut s'écouler de manière axiale,
- comprenant un cadre sensiblement rectangulaire (4) pour fixer le bloc d'éléments chauffants (2), qui est inséré dans le cadre (4), avec un côté inférieur de bloc d'éléments chauffants (5) en premier,
- dans lequel le cadre (4) a un côté inférieur de cadre (6) et un côté supérieur de cadre (7),
- dans lequel le côté inférieur de cadre (6) est réalisé sous la forme d'un support côté bord (8) pour le côté inférieur de bloc d'éléments chauffants (5),
- dans lequel le cadre (4) a un côté intérieur (9), qui est orienté vers le bloc d'éléments chauffants (2), et un côté extérieur (10), qui est orienté à l'opposé du bloc d'éléments chauffants (2),
- dans lequel le cadre (4) a deux sections longitudinales (11) et une section transversale (12),
- dans lequel les deux sections longitudinales (11) s'étendent sensiblement perpendiculairement à la section transversale (12),
- dans lequel, sur son côté intérieur (9), le cadre (4) présente au moins deux éléments d'encliquetage (13) pour fixer le bloc d'éléments chauffants (2),
- dans lequel les au moins deux éléments d'encliquetage (13) ont chacun un bec d'encliquetage (14), qui fait saillie radialement vers l'intérieur au-delà de l'élément d'encliquetage restant (13),
- dans lequel le bloc d'éléments chauffants (2) présente deux contours extérieurs (15), qui s'étendent le long des deux sections longitudinales (11),
- dans lequel les deux contours extérieurs (15) présentent au moins deux contours d'encliquetage (16),
- dans lequel le bec d'encliquetage respectif (14) vient en prise avec le contour d'encliquetage respectif (16),
**caractérisé en ce que**
le bec d'encliquetage respectif (14) est disposé entre un plan de côté supérieur de bloc (18), qui s'étend parallèlement à un côté supérieur de bloc d'éléments chauffants (19), et un plan de côté inférieur de bloc (20), qui s'étend parallèlement au côté inférieur de bloc d'éléments chauffants (5).

2. Dispositif de chauffage selon la revendication 1,
**caractérisé en ce que**
le contour d'encliquetage respectif (16) est formé au moyen d'un enfoncement (17) sur le contour extérieur respectif (15).

3. Dispositif de chauffage selon la revendication 2,
**caractérisé en ce que**
l'enfoncement respectif (17) est agencé espacé axialement du côté supérieur de bloc d'éléments chauffants (19) et espacé axialement du côté inférieur de bloc d'éléments chauffants (5).

4. Dispositif de chauffage selon la revendication 2,
**caractérisé en ce que**
l'enfoncement respectif (17) jouxte le côté supérieur de bloc d'éléments chauffants (19) de manière ouverte.

5. Dispositif de chauffage selon l'une des revendications 2 à 4,
**caractérisé en ce que**
- le contour d'encliquetage respectif (15) est formé par une paroi extérieure côté bord (31) du bloc d'éléments chauffants (2).
- l'enfoncement respectif (17) pénètre complètement dans la paroi extérieure respective (31) d'une manière radiale.

6. Dispositif de chauffage selon l'une quelconque des revendications précédentes, **caractérisé en ce que**
- le bloc d'éléments chauffants (2) a une section de connexion (21), qui est espacée de la section transversale (12), pour connecter le bloc d'éléments chauffants (2) à un dispositif de commande (22),
- au moins deux contours d'encliquetage (16) sont réalisés sur le contour extérieur respectif (15) sur le côté, qui est espacé de la section de connexion (21).

7. Dispositif de chauffage selon l'une quelconque des revendications précédentes, **caractérisé en ce que**
- le bloc d'éléments chauffants (2) présente au moins deux éléments chauffants en forme de tige (23), qui s'étendent parallèlement l'un à l'autre,
- les au moins deux éléments chauffants (23) présentent des lamelles (24), à travers lesquelles l'écoulement de fluide (30) peut s'écouler de manière axiale et qui coopèrent ainsi avec l'écoulement de fluide (30) de manière à transférer de la chaleur.

8. Dispositif de chauffage selon l'une quelconque des revendications précédentes,
**caractérisé en ce que**
le cadre (4) est réalisé d'une seule pièce.

9. Dispositif de chauffage selon l'une quelconque des revendications précédentes,
**caractérisé en ce que**
le cadre (4) est une pièce moulée par injection réalisée en plastique.

10. Dispositif de chauffage selon l'une quelconque des revendications précédentes,
**caractérisé en ce que**
les au moins deux éléments d'encliquetage (13) sont réalisés d'une seule pièce avec le cadre (4).

11. Dispositif de chauffage selon l'une des revendications 1 à 9,
**caractérisé en ce que**
les au moins deux éléments d'encliquetage (13) sont moulés par injection sur le cadre (4).

12. Climatisation,
- comprenant au moins un évaporateur pour refroidir un écoulement d'air et au moins un dispositif de chauffage (1) selon l'une quelconque des revendications précédentes pour chauffer l'écoulement d'air,
- comprenant un boîtier de climatisation, dans lequel le au moins un évaporateur et le au moins un dispositif de chauffage (1) sont agencés.

13. Procédé de fabrication d'un dispositif de chauffage (1) selon l'une des revendications 1 à 11, dans le cas où le bloc d'éléments chauffants (2) est inséré dans le cadre (4) dans la direction axiale (3), avec le côté inférieure de bloc d'éléments chauffants (5) en premier, de sorte que le côté inférieur de bloc d'éléments chauffants (5) appuie sur le support (8) et les becs d'encliquetage (14) se verrouillent avec les contours d'encliquetage (16).
